# EUROPEAN PATENT SPECIFICATION

(11) **EP 2 720 837 B1**
(45) Date of publication and mention of the grant of the patent: **11.03.2015**
(21) Application number: 12738149.9
(22) Date of filing: 15.06.2012
(51) Int. Cl.: B23D 47/04, B26D 1/10, A01G 9/10

(54) **AN APPARATUS FOR FORMING A GROWING SUBSTRATE, AND A SYSTEM FOR GROWING PLANTS**
VORRICHTUNG ZUR HERSTELLUNG EINES WACHSTUMSSUBSTRATS UND SYSTEM ZUM ZÜCHTEN VON PFLANZEN
APPAREIL POUR FORMER UN SUBSTRAT DE CULTURE ET SYSTÈME POUR CULTIVER DES VÉGÉTAUX

(30) Priority: 17.06.2011 FI 20115616
(43) Date of publication of application: 23.04.2014
(73) Proprietor: Green Automation Export Oy, 00580 Helsinki (FI)
(72) Inventor: KANTOLA, Juhana, FI-36270 Kangasala (FI); RAPILA, Tero, FI-03100 Nummela (FI); RAPILA, Timo, FI-38950 Honkajoki (FI)
(74) Representative: Tampereen Patenttitoimisto Oy
(86) International application number: PCT/FI2012/050620
(87) International publication number: WO 2012/172186

(56) References cited:
- WO-A2-01/10611
- WO-A2-2009/007533
- GB-A- 1 402 912
- US-A- 3 667 522
- US-A1- 2009 101 026

## Description

### Field of the invention

The invention relates to an apparatus which is configured to cut an elongated growing substrate out of a sheet element, for being inserted in a trough for growing seeds and/or seedlings, as well as to insert the growing substrate in the trough.

### Background of the invention

In prior art, the growing of leaf vegetables in greenhouses is based on the use of, for example, elongated pipes, the side surface of the pipe being equipped with openings, in which seedlings are placed. The seedlings of the plants are placed in the openings in the pipe, each seedling also including a root ball consisting of e.g. soil. Normally, the root ball is also surrounded by a supporting structure, which is e.g. a mesh-like pot. Said pot is made of, for example, plastic, but also compressed peat or the like can be applied. The seed of the plant is sowed in said pot which has first been filled with e.g. peat. The peat is used as the growing substrate for the seed and the seedling. The pots are placed in cells which are brought into e.g. a chamber at a suitable temperature and under conditions favourable for germination. The cells are, for example, boxes equipped with cavities for the pots. After the germination, the cells are placed on a seedling table, where the seedlings are irrigated from above. After this, the pots with the seedlings are removed from the cells and placed in openings of the pipes.

A seedling that has grown to a sufficient size, with its root ball and the pot, is placed in the pipe, whose openings accommodate several seedlings in succession. The pipe is placed on a cultivation table in a greenhouse, where the seedling of the plant is allowed to grow until the plant is ready for harvesting. Normally, automatic cultivation tables are used, which take care of the irrigation of the plants and transfer the pipe forward, wherein the direction of movement is transverse to the longitudinal direction of the pipe. Furthermore, the plant tables change the distance between the pipes so that when the plant grows in size, the distance between the pipes is also increased automatically. Normally, at the initial end of the cultivation table, the plants are placed in the pipes, and the pipes are also as close to each other as possible; and at the terminal end of the cultivation table, the plants are collected from the openings of the pipes, together with the root ball and the pot, and the pipes are spaced from each other. The empty pipes are brought to the initial end of the table for filling again, possibly preceded by washing of the pipes.

The pipe used for growing is, for example, a tubular structure whose top surface has been drilled or punched to provide openings, in which the seedlings, together with the root ball and normally also with a pot, can be inserted firmly. The roots of the seedling, which are in the root ball, are placed inside the pipe, to which irrigation water is led. The roots of the seedlings take in the water they need, and excess water can be drained along the pipe. In an example, irrigation water with nutrients is supplied into the pipe via its first end, and excess irrigation water is drained from the pipe via its opposite second end. The pipe is made of, for example, plastic, by applying, for example, extrusion as the manufacturing method.

Publication DE 8901847 U1 presents an example of a pipe used for cultivation, where the bottom part and the cover of the pipe are made of two different pieces which are joined together. The cover is provided with punched holes, in which the seedling and its root ball as well as the pot enclosing the root ball can be inserted. The cross-section of the bottom part of the pipe can have, for example, a U shape or an H shape, with either vertical or slightly slanted side walls. The shape of the bottom of the bottom part is, for example, horizontal or a V shape.

The use of the pot, the filling of the pot with peat, the sowing of the seed in the peat, the transferring of the pot to the germination process and from there e.g. onto a seedling table (utilizing e.g. cells which hold several pots in the process), and further the transferring of the seedling with its pot into the opening of the pipe and onto the cultivation table, and finally, for the harvesting, also the removal of the finished plant with its pot from the pipe, are steps of cultivation of plants, for example, in greenhouses, in the case of growing leaf vegetables and particularly lettuce.

The above presented steps are difficult to automate, for efficient cultivation.

Publications US-3667522-A, US-2009/101026-A1 and WO-01110611-A2 disclose cutting devices.

### Brief summary of the invention

The apparatus according to the invention is presented in claim 1.

Now, furthermore, a solution is presented, by which the cultivation of e.g. leaf vegetables in greenhouses can be made significantly simpler and more efficient. In addition, the present solution makes it possible to automate several steps of the cultivation.

A particular feature in the solution is to apply, in the cultivation, an open trough, in which the growing substrate needed by the plant is placed. Preferably, the substrate is placed in the trough automatically. The plant is in the trough both as a seed and as a seedling, and as a plant ready for harvesting, so that it is possible to reduce manual work stages and to automate the manipulation of troughs.

In an embodiment of the solution, a seed is sowed in a trough which is provided with a growing substrate needed by the seed. Said trough is also used during germination, and the seedling is allowed to grow in it until it is ready for harvesting. Preferably, the trough is open at the top, either entirely or almost entirely, so that the planting distance between two seeds can be selected freely. Because the trough is open at the top, the growing substrate can be easily installed in it, particularly also with an automated apparatus.

In an advantageous embodiment of the solution, the substrate is an elongated or band-like element. Preferably, an apparatus is available, by means of which the element is first formed and then inserted, lowered or dropped into the trough, through the open side of the trough.

In an embodiment of the solution, the band-like growing substrate is cut out of one or more sheet elements, for example by sawing. The material of the growing substrate is, for example, insulation material used for building construction, supplied in sheet elements and consisting of mineral wool. The growing substrate can also consist of soil or peat.

### Description of the drawings

Figure 1 shows a cross-section of a trough, seen at the end of the trough;
Fig. 2 shows an elongated trough and its structure;
Fig. 3 shows a cross-section of a trough, seen at the end of the trough and holding an elongated substrate;
Fig. 4 shows one end of an elongated trough, holding an elongated growing substrate;
Fig. 5 shows a reduced view of an apparatus configured to form growing substrates and to place them in a trough;
Fig. 6 shows a detail of the apparatus of Fig. 5; and
Figs. 7 to 10 show some examples of principles by which a growing substrate is formed and placed in a trough.

### Detailed description of the invention

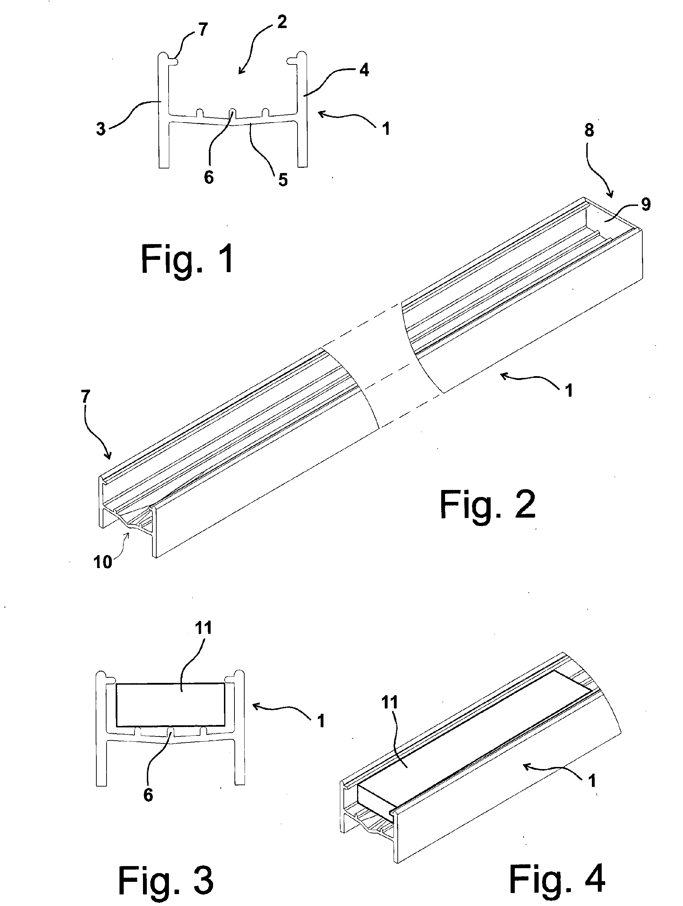

Figure 1 shows a trough 1 according to the present solution, comprising a left side wall 3 and a right side wall 4, which are parallel and in this example also vertical in their use position. The side walls are spaced from each other, and they are joined by a bottom 5 which is horizontal. The bottom 5 is connected at a distance from the lowermost ends of the side walls, making up an H shape. A chamber 2 is left between the side walls and above the bottom, in which space the growing substrate needed by the plant and the seed are placed. The side walls 3 and 4 can also be slightly oblique and tilted towards each other. The bottom can also be oblique or it has a V shape.

The trough 1 does not have a cover, but pieces can be placed between the uppermost ends of the side walls, such as supports, bridges or braces, to support the side walls, the substrate placed in the chamber, or the growing plant. Said pieces can be, for example, rigid plates, sticks or bands. In an example, said pieces constitute covers which are placed between the plants. In this example, the side walls are provided with collars 7 extending in the direction of the chamber 2, facing each other. The collar 7 is placed at the upper end of the side wall. A locking piece can be placed between two opposite collars 7 to hold the growing substrate in the chamber 2. The locking piece is, for example, a rigid plate, stick or band placed on the growing substrate.

Preferably, one or more supports 6 are provided on the bottom of the chamber 2, fixed to the bottom 5, lifting the support off the bottom 5 and forming one or more air passages between the bottom 5 and the growing substrate, through which passages irrigation water can also flow.

The trough 1 is preferably made of plastic by extrusion, wherein the cross-sectional shape of the trough 1 of Fig. 1 extends continuously over the whole length of the elongated trough 1, as shown in Fig. 2. In another example, the trough 1 is made of aluminium by extrusion. The length of the trough 1 is multiple compared with the width of its chamber 2 or the height of the side wall. In the example of Fig. 2, the first end 8 of the trough is closed with a vertical cover 9. At the end 8 of the trough, irrigation water can be supplied, flowing through the whole trough 1 and the chamber 2 and exiting from the second end 7 of the trough. The second end 7 can be provided with, for example, a recess 10 to facilitate the draining of irrigation water from the trough.

In Fig. 3, the growing substrate 11 is placed on top of supports 6 in the chamber 2. The growing substrate 11 is placed or lowered in the chamber 2 via the open top of the trough 1. In this example, the width of the growing substrate 11 is configured such that the substrate can be dropped in place between the side walls from above the trough 1, and if necessary, it fits between the collars 7. The height of the growing substrate 11 is configured, for example, such that the substrate is placed under the uppermost ends or collars 7 of the side walls.

In an example and Fig. 4, the growing substrate 11 is an elongated or band-like element made of a solid porous material and constituting a flexible structure which is resistant to e.g. bending, at least to some extent, without breaking. The growing substrate 11 can also consist of a rollable material which is band-like and supplied in rolls. Of the band-like growing substrate, a suitable length is cut out and placed in the trough 1, or several portions which are shorter than the total length of the trough 1 are placed in the trough 1. It is also possible to place, for example, two band-like growing substrates on top of each other in the trough 1. The trough 1 is primarily or totally open on one side (see the open top side in Fig. 1) so that a growing substrate 11 or several growing substrates 11 can be placed in the trough from a direction that is transverse to the longitudinal direction of the trough (that is, from above in Fig. 1).

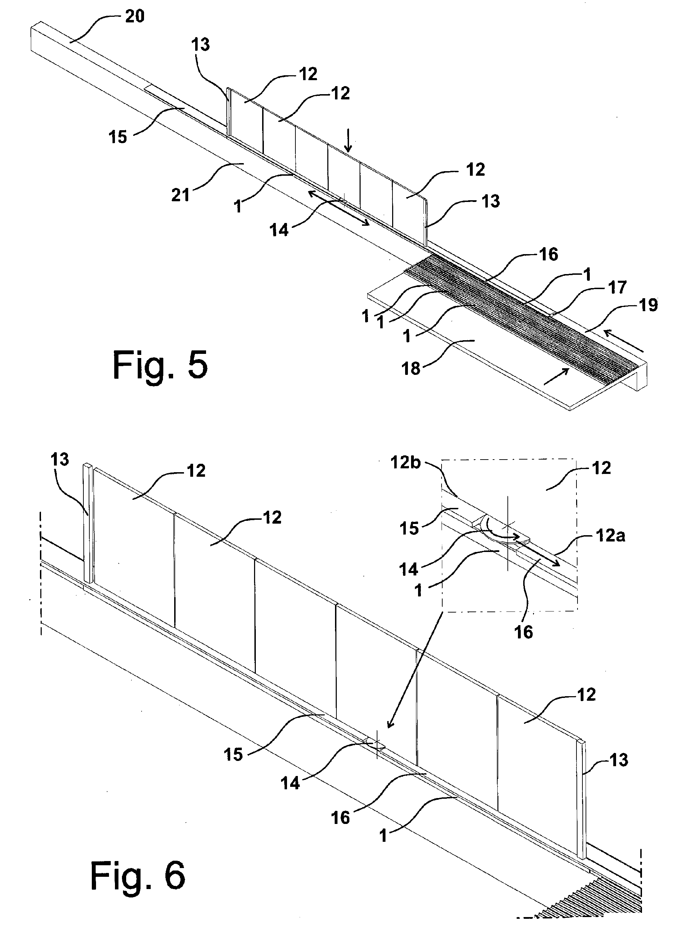

In an example, the band-like element of the growing substrate 11 is removed from a sheet element, that is, a sheet 12 shown in Fig. 5, for example by sawing or cutting. Several band-like elements for the growing substrate 11 are obtained from the sheet 12. Preferably, the thickness of the sheet 12 corresponds to the width of the growing substrate 11 of Fig. 3, and the width or length of the sheet 12 corresponds to the length of the growing substrate 11 shown in Fig. 4. The height or thickness of the growing substrate 11 shown in Fig. 3 is determined on the basis of cutting of the sheet 12. The sheets 12 are preferably rectangular sheets.

The material of the sheet 12 and thereby also the substrate 11 is preferably mineral wool, for example rock wool or glass wool, which is also used as thermal insulation in a known manner. The material can also be soil or peat.

Figure 5 shows an example of an apparatus, by means of which the cutting of the growing substrate 11 out of the sheet 12, and the placement of the growing substrate 11 in the trough 1 are automated. By means of the apparatus, the feeding of empty troughs 1 in the apparatus and the discharging of finished troughs 1 from the apparatus are also automated.

The automatic apparatus comprises a magazine 13 in which one or more sheets 12 are stored, of which sheets the growing substrates 11 are cut out. The magazine 13 comprises the necessary means for holding the sheet 12 in a desired position. In this example, the separate sheets 12 are placed one after the other, forming a large sheet, from whose one edge growing substrates 11 are cut out and placed in a trough 1.

In the example of Figs. 5 and 6, the sheets 12 are vertical, and growing substrates are cut out of their lower edge 12a. The apparatus and its means are configured so that the growing substrates 11 are dropped either by gravity or in an assisted manner into the trough 1 which is underneath the sheet. The apparatus holds the trough 1, and its chamber 2 faces upwards, towards the lower edge 12a of the sheet, and the trough 1 is parallel with the lower edge 12 of the sheet. During cutting, the trough 1 is stationary, when the moving blade 14 of the cutting apparatus cuts growing substrates 11 out of the sheet 12, the substrates being guided into the trough 1. The movement of the blade 14 is parallel with the trough 1. The vertical distance of the blade 14 from the lower edge 12a determines the thickness of the growing substrate 11. In this example, the blade 14 is a rotary disc which is transversely to the vertical plane defined by the sheet 12. Thanks to the cutting, the sheet 12 is provided with a new lower edge 12b, from which a new growing substrate 11 is later removed, for example for the next trough. The blade 14 may also be movable back and forth, like a knife or a saw, or a band-like saw.

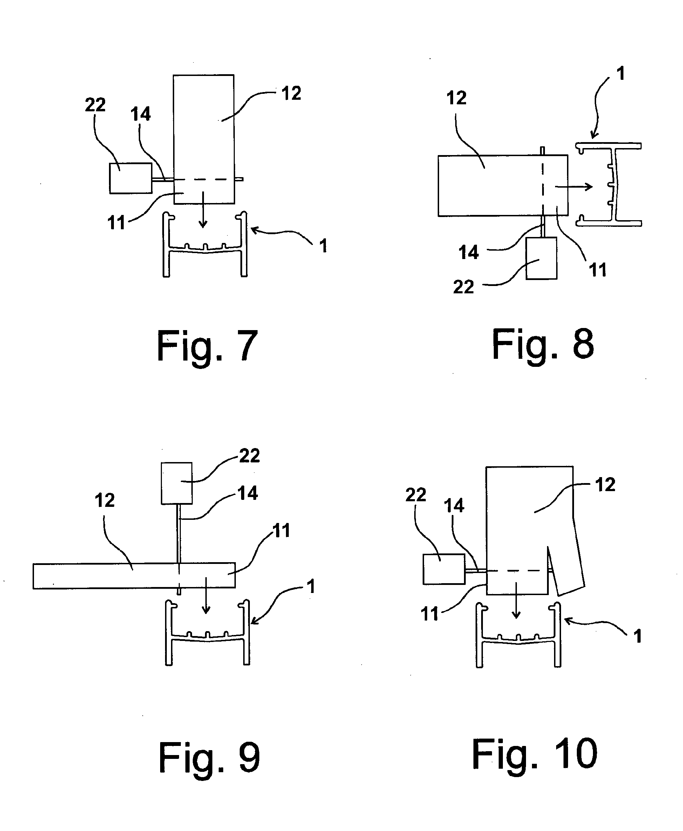

According to another example, the magazine 13 and the sheets 12 are horizontal, that is, placed obliquely or transversely to the position shown in Fig. 6 (cf. the principle of Fig. 9). Growing substrates 11 are cut out of one edge (cf. the lower edge 12a) of the sheets and dropped either by gravity or in an assisted manner into the trough 1 placed under the edge. The blade 14 is thus, for example, vertical. In a third example, the trough 1 is also turned 90° compared to the position of Fig. 1 and is placed adjacent to the edge of the horizontal sheet 12 (cf. the principle of Fig. 8). If necessary, the apparatus is equipped with the necessary means, for example rollers or guides, for guiding the cut-out growing substrates 11 into the trough 1 and, if necessary, also preventing the substrate from falling off the trough.

As the sheets 12 in the magazine 13 become smaller, new sheets can be fed to the magazine, either in place of or behind the diminished sheets 12, wherein the apparatus can operate without interruption.

In an example, the magazine 13 is arranged to hold the sheets 12 still during the cutting. The sheets are either horizontal or vertical. The magazine 13 comprises means arranged to hold the vertical sheets 12 of Fig. 6 on a desired height level during the cutting. After the cutting, when the blade 14 has also been pulled from below the sheets 12, the magazine lowers the sheets 12 or lets the sheets 12 fall a desired amount which corresponds to the thickness of the growing substrate 11. In the alternative in which the sheets 12 are horizontal, the magazine 13 comprises, for example, one or more pushers for moving the sheets 12 a desired distance. After this, cutting can be started again, and the cut lower edge 12b now forms a new lower edge 12a, from which the growing substrate 11 is cut out.

In another alternative shown in Fig. 6, the sheets 12 remain in place by gravity, and merely their weight tends to move them downwards and towards the movable horizontal stop surfaces 15 and 16. The lower stop surface 16 is placed against the lower edge 12a, and the upper stop surface 15 is placed against the lower edge 12b. The distance between the stop surfaces substantially corresponds to the thickness of the growing substrate 11. Preferably, the distance between the stop surfaces 15 and 16 is adjustable, wherein the thickness of the growing substrates 11 can be changed. The stop surfaces 15 and 16 as well as the blade 14 are placed one after the other, and the blade 14 is placed between the stop surfaces. The blade 14 is placed substantially on the same level as the upper stop surface 15. Each stop surface extends in parallel with the trough 1 over the sheets 12. Each stop surface separately extends to all the sheets 12 in the magazine: the upper stop surface 15 when the cutting has been completed (see Fig. 5, the blade is next to or below the right edge of the apparatus or the magazine 13), but the blade 14 has not yet been returned from below the sheets 12; and the lower stop surface 16 when the cutting has not yet been started (see Fig. 5, the blade is next to the left edge of the apparatus or the magazine 13). The simultaneous movement of the stop surfaces is parallel with the trough 1.

The above described stop surfaces can also be used when the sheets are horizontal in the magazine (the trough 1 is open either upwards or to the side), as described above. Thus, the magazine 13 comprises, for example, one or more pushers for continuously pushing sheets 12 towards the stop surfaces. The stop surfaces operate as described above (the stop surfaces 15 and 16), but they are now vertical, and the blade 14 is thus vertical as well. In the example of Fig. 6, the stop surfaces 15 and 16 move between the sheet 12 and the trough 1.

In a third example, the blade 14 and the stop surfaces 15 and 16 are stationary in Fig. 5 but the magazine 13 and the trough 1 move simultaneously and in a synchronized manner past the blade 14 during the cutting. This embodiment is also possible in the example in which the sheets 12 are horizontal, or in the example in which there are no stop surfaces and the magazine is equipped with means for holding the sheets still and for moving them a desired distance (for example, one or more pushers).

Before cutting the sheets, the trough 1 is moved under the sheets 12, as shown in Fig. 5. In the other examples, the trough 1 is moved, for example, next to the sheets 12 to a location where the cut-out growing substrate 11 falls into the trough 1 or it can be guided into the trough. Preferably, the length of the trough 1 corresponds to the common width of the sheets 12. In another alternative, the length of the trough 1 is multiple compared with the common width of the sheets 12, so that there are two or more cutting steps for each trough 1. The trough 1 is moved between the cutting steps so that desired points of the trough 1 are provided with a growing substrate 11. The growing substrates 11 are preferably placed along the whole length of the trough 1.

The troughs 11 can also be fed or placed into the apparatus manually, but it is preferable that the apparatus also comprises automated means for feeding the trough into the apparatus or discharging the trough from the apparatus. The apparatus of Fig. 5 is provided with feeding means 17 by which the trough 1 can be moved into a station in which the cut-out growing substrate 11 falls, is moved or guided into the trough 1. In Fig. 5, the feeding means 17 is a pusher attached to the lower stop surface 16 and pushing the trough 1. In the example in which the magazine is movable, the feeding means 17 can be fastened to the magazine. In an alternative, the feeding means 17 moves independently and is moved by a separate actuator.

The steps of the operation of the apparatus are arranged, for example, in such a way that after the cutting, the feeding means 17 grips the trough 1 and pushes it to the sheets 12 when the blade 14 returns to a position from which a new sawing movement can be started. Simultaneously, a new trough 1 pushes the trough filled with the cut-out growing substrate away from the sheets 12. If necessary, the apparatus comprises transfer means for transferring the filled trough away from the sheets 12, for example, to a conveyor, an intermediate storage or a support, a surface or a table for storing several filled-in troughs.

According to the example of Fig. 5, and the same principles can also be applied in other examples presented above, the apparatus comprises a frame structure or a frame 21, in which the different means and actuators are placed. The frame 21 constitutes the necessary means for supporting and holding the trough 1 and enabling its movements. The frame 21 is equipped with the necessary guides, actuators, motors, and electronic control units for effecting the movements of the apparatus and the synchronization or phasing of the functions. In an example, the movement of the stop surfaces and the blade is implemented manually, but preferably their movement is implemented by controlled actuators. In the implementation of the apparatus, it is possible to apply electronic, pneumatic or hydraulic actuators and, if necessary, also programmable control devices which investigate, for example by means of sensors or switches, the status of the apparatus and control the actuators in a predetermined way. These devices will not be explained in more detail, because their selection, assembly and placement are obvious as such. The above presented description provides sufficient instructions for implementing the different functions of the apparatus so that a person skilled in the art can implement it and make the more specific selections for, for example, the actuators and the control or control devices needed by them. According to the example of Fig. 5, empty troughs 1, in which the substrate is placed and which are moved to one or more sheets 12 for filling, are placed at the first end 19 of the frame 21. The magazine 13 is placed in the centre part of the frame 21. The filled troughs 1 are moved to the opposite second end 20 of the frame, from which they are removed or where there are stored on *e.g.* a table or a surface. Further in the example of Fig. 5, the upper stop surface 15 moves on top of the second end 20 and the second stop surface 16 moves on top of the first end 19.

The frame 21 may also comprise means for moving the troughs forward for further processing. Furthermore, it is possible, as in the example of Fig. 5, that a horizontal trough magazine 18, holding several empty troughs 1 aligned next to each other, is provided at the first end 19. In this example, the trough magazine 18 is a horizontal table, stand or surface. The frame 21 or the trough magazine 19 comprises the necessary means for moving one trough at a time to a location where *e.g.* a feeding means 17 can move it to the sheets 12. The trough magazine may also be vertical so that the troughs are on top of each other.

Figures 7, 8, 9, and 10 show the alternatives, on which the examples presented in the above description are based. Figure 10 also shows a situation in which the thickness of the sheet 12 is greater than the final width of the growing substrate. Therefore, the sheet 12 also has to be cut in a direction which is transverse to the cutting direction defined by the blade 14 of the cutting device 22. Thus, the apparatus may comprise at least two cutting devices with blades for cutting a growing substrate 11 of a desired size out of the sheet 12. The excess part of the sheet 12 is cut off or forwarded elsewhere.

The location of use of the apparatus is preferably a greenhouse which also comprises the above-mentioned cultivation tables, or the apparatus is placed in the immediate vicinity of the greenhouse. The presented apparatus may also be part of a system applied in the greenhouse. The system comprises a device for sowing seeds into the growing substrate in a trough, or the necessary transport means, or devices for removing the growing substrate from the trough after harvesting, or washing devices for washing the troughs, for example after the removal of the growing substrate, or any combination of these. In an example, the apparatus is provided with at least a sowing device. Preferably, the sowing device is automatic and it applies, for example, underpressure and/or pressurized air for guiding the seed to the growing substrate.

The invention is not limited solely to the above-presented examples, alternatives or embodiments, but it can also be applied within the scope of the technical features of the appended claims.

## Claims

1. An apparatus for forming a growing substrate, the apparatus comprising:
- a magazine (13) for storing one or more sheet elements (12); and
- a cutting device (22, 14) configured to cut an elongated growing substrate (11) out of the edge of one or more sheet elements in the magazine, for being placed inside an elongated trough for growing seeds and/or seedlings;
- wherein the apparatus is further configured to drop, to assist or to guide the cut-out growing substrate (11) into the trough,
**characterized in that** the apparatus further comprises:
- an upper stop surface (16), against which the new cut edge (12b) of the sheet element is placed during cutting; and
- a lower stop surface (15), against which the old edge (12a) of the sheet element to be cut is placed during cutting;
- wherein the cutting device further comprises a blade (14) configured to cut the growing substrate out of the sheet element; and
- wherein the upper stop surface (16) and the lower stop surface (15) are placed one after the other and the blade (14) is placed between the upper stop surface (16) and the lower stop surface (15).

2. The apparatus according to claim 1, **characterized in that** the cutting device comprises a blade (14) configured to move in the longitudinal direction of the trough and simultaneously to cut the growing substrate out of the sheet element, wherein the magazine is also configured to hold the sheet element in such a way that the edge of the sheet element is parallel with the trough.

3. The apparatus according to claim 1, **characterized in that** the apparatus further comprises a sowing device configured to sow seeds into the growing substrate in the trough.

4. The apparatus according to claim 3, **characterized in that** the upper stop surface (16), the lower stop surface (15) and the blade (14) are configured to move in the longitudinal direction of the trough during cutting.

5. The apparatus according to any of the claims 2 to 4, **characterized in that** the blade (14) is a rotary disc.

6. The apparatus according to any of the claims 1 to 4, **characterized in that** the magazine is configured to hold several sheet elements (12) next to each other, wherein a sheet is formed that is larger than a single sheet element, and the edge of the sheet which is longer than the edge of a single sheet element and from which the growing substrate is cut out.

7. The apparatus according to claim 3, **characterized in that** the magazine is configured to hold the sheet element (12) in the vertical position and to allow the sheet element to be placed by its own weight against the upper stop surface and/or the lower stop surface.

8. The apparatus according to any of the claims 1 to 7, **characterized in that** the trough in the apparatus is placed under the cultivation substrate to be cut out.

9. The apparatus according to any of the claims 1 to 8, **characterized in that** the apparatus also comprises a trough magazine (18) configured to store several empty troughs (1) aligned next to each other, and means for feeding a single trough (1) from the trough magazine to the sheet element.

10. The apparatus according to any of the claims 1 to 9, **characterized in that** a side of said trough, which is parallel to the longitudinal direction of the trough, is totally or almost totally open; and the apparatus is further configured to drop, to assist or to guide the cut-out growing substrate (11) into the trough through said open side.

## Patentansprüche

1. Vorrichtung zur Herstellung eines Wachstumssubstrats, wobei die Vorrichtung Folgendes aufweist:
- ein Magazin (13) zum Speichern eines oder mehrerer Flachkörperelemente (12); und
- eine Schneidvorrichtung (22, 14), die konfiguriert ist, um ein längliches Wachstumssubstrat (11) vom Rand eines oder mehrerer Flachkörperelemente im Magazin abzuschneiden, so dass es bzw. sie zum Aussäen von Samen oder Anwachsen von Sämlingen in einer länglichen Mulde platziert wird bzw. werden;
- wobei die Vorrichtung darüber hinaus konfiguriert ist, das abgeschnittene Wachstumssubstrat (11) in der Mulde abzulegen, in diese zu befördern oder zu führen,
**dadurch gekennzeichnet, dass** die Vorrichtung ferner Folgendes aufweist:
- eine obere Anschlagfläche (16), an der der neu geschnittene Rand (12b) des Flachkörperelements während des Schneidens platziert wird; und
- eine untere Anschlagfläche (15), an der der alte Rand (12a) des zu schneidenden Flachkörperelements während des Schneidens platziert wird;
- wobei die Schneidvorrichtung darüber hinaus ein Schneidblatt (14) aufweist, das konfiguriert ist, um das Wachstumssubstrat vom Flachkörperelement abzuschneiden; und
- wobei die obere Anschlagfläche (16) und die untere Anschlagfläche (15) hintereinander angeordnet sind und das Schneidblatt (14) zwischen der oberen Anschlagfläche (16) und der unteren Anschlagfläche (15) platziert ist.

2. Vorrichtung gemäß Anspruch 1, **dadurch gekennzeichnet, dass** die Schneidvorrichtung ein Schneidblatt (14) aufweist, das konfiguriert ist, um sich in der Längsrichtung der Mulde zu bewegen und gleichzeitig das Wachstumssubstrat von dem Flachkörperelement abzuschneiden, wobei das Magazin auch dazu konfiguriert ist, das Flachkörperelement so zu halten, dass der Rand des Flachkörperelements parallel zur Mulde ist.

3. Vorrichtung gemäß Anspruch 1, **dadurch gekennzeichnet, dass** die Vorrichtung darüber hinaus eine Aussaatvorrichtung aufweist, die konfiguriert ist, Samen in das Wachstumssubstrat in der Mulde auszusäen.

4. Vorrichtung gemäß Anspruch 3, **dadurch gekennzeichnet, dass** die obere Anschlagfläche (16), die untere Anschlagfläche (15) und das Schneidblatt (14) konfiguriert sind, um sich während des Schneidens in Längsrichtung der Mulde zu bewegen.

5. Vorrichtung gemäß einem der Ansprüche 2 bis 4, **dadurch gekennzeichnet, dass** das Schneidblatt (14) eine Drehscheibe ist.

6. Vorrichtung gemäß einem der Ansprüche 1 bis 4, **dadurch gekennzeichnet, dass** das Magazin konfiguriert ist, mehrere Flachkörperelemente (12) nebeneinander zu halten, wobei ein Flachkörper gebildet ist, der größer als ein einzelnes Flachkörperelement und den Rand des Flachkörpers zu halten, der länger als der Rand eines einzelnen Flachkörperelements ist und von dem das Wachstumssubstrat abgeschnitten wird.

7. Vorrichtung gemäß Anspruch 3, **dadurch gekennzeichnet, dass** das Magazin konfiguriert ist, das Flachkörperelement (12) in vertikaler Position zu halten und es zu ermöglichen, dass das Flachkörperelement aufgrund seines Eigengewichts an der oberen Anschlagfläche und/oder unteren Anschlagfläche platziert wird.

8. Vorrichtung gemäß einem der Ansprüche 1 bis 7, **dadurch gekennzeichnet, dass** die Mulde in der Vorrichtung unter dem abzuschneidenden Wachstumssubstrat platziert wird.

9. Vorrichtung gemäß einem der Ansprüche 1 bis 8, **dadurch gekennzeichnet, dass** die Vorrichtung auch ein Muldenmagazin (18), das konfiguriert ist, mehrere leere Mulden (1) vorzuhalten, die nebeneinander ausgerichtet sind, und Mittel zum Zuführen einer einzelnen Mulde (1) aus dem Muldenmagazin zum Flachkörperelement aufweist.

10. Vorrichtung gemäß einem der Ansprüche 1 bis 9, **dadurch gekennzeichnet, dass** eine Seite der Mulde, die parallel zur Längsrichtung der Mulde ist, vollständig oder nahezu vollständig offen ist; und die Vorrichtung darüber hinaus konfiguriert ist, das abgeschnittene Wachstumssubstrat (11) in der Mulde durch die offene Seite abzulegen, in diese zu befördern oder zu führen.

## Revendications

1. Appareillage pour la formation d'un substrat de croissance, l'appareillage comprenant :
- un magasin (13) pour stocker un ou plusieurs éléments en feuille (12) ; et
- un dispositif de coupe (22, 14), configuré de façon à découper un substrat de croissance allongé (11) à partir du bord d'un ou plusieurs éléments en feuille se trouvant dans le magasin, pour mise en place à l'intérieur d'une auge allongée destinée à recevoir des graines et/ou des plantes de semis en cours de croissance ;
- l'appareillage étant en outre configuré pour faire tomber, aider ou guider dans l'auge le substrat de croissance découpé (11),
**caractérisé en ce que** l'appareillage comprend en outre :
- une surface d'arrêt supérieure (16), contre laquelle le nouveau bord découpé (12b) de l'élément en feuille est placé pendant la coupe ; et
- une surface d'arrêt inférieure (15), contre laquelle l'ancien bord (12a) de l'élément en feuille devant être découpé est placé pendant la coupe ;
- le dispositif de coupe comprenant en outre une lame (14), configuré pour découper le substrat de croissance à partir de l'élément en feuille ; et
- la surface d'arrêt supérieure (16) et la surface d'arrêt inférieure (15) étant placées l'une derrière l'autre, et la lame (14) étant placée entre la surface d'arrêt supérieure (16) et la surface d'arrêt inférieure (15).

2. Appareillage selon la revendication 1, **caractérisé en ce que** le dispositif de coupe comprend une lame (14) configurée pour se déplacer dans la direction longitudinale de l'auge et simultanément découper le substrat de croissance à partir de l'élément en feuille, le magasin étant aussi configuré de façon à maintenir l'élément en feuille de telle sorte que le bord de l'élément de feuille soit parallèle à l'auge.

3. Appareillage selon la revendication 1, **caractérisé en ce que** l'appareillage comprend en outre un dispositif de semoir configuré pour semer des graines dans le substrat de croissance se trouvant dans l'auge.

4. Appareillage selon la revendication 3, **caractérisé en ce que** la surface d'arrêt supérieure (16), la surface d'arrêt inférieure (15) et la lame (14) sont configurées de façon à se déplacer pendant la coupe dans la direction longitudinale de l'auge.

5. Appareillage selon l'une quelconque des revendications 2 à 4, **caractérisé en ce que** la lame (14) est un disque rotatif.

6. Appareillage selon l'une quelconque des revendications 1 à 4, **caractérisé en ce que** le magasin est configuré de façon à maintenir plusieurs éléments en feuille (12) les uns à côté des autres, une feuille étant formée, qui est plus grande qu'un élément en feuille unique, et le bord de la feuille qui est plus long que le bord d'un élément en feuille unique et à partir duquel le substrat de croissance est découpé.

7. Appareillage selon la revendication 3, **caractérisé en ce que** le magasin est configuré de façon à maintenir l'élément en feuille (12) en position verticale et à permettre à l'élément en feuille d'être placé sous l'effet de son propre poids contre la surface d'arrêt supérieure et/ou la surface d'arrêt inférieure.

8. Appareillage selon l'une quelconque des revendications 1 à 7, **caractérisé en ce que** l'auge se trouvant dans l'appareillage est placé en-dessous du substrat de culture devant être découpé.

9. Appareillage selon l'une quelconque des revendications 1 à 8, **caractérisé en ce que** l'appareillage comprend aussi un magasin à auges (18), configuré de façon à stocker plusieurs auges vides (1) alignées les unes à côté des autres, et un moyen pour amener une auge unique (1) du magasin à auges à l'élément en feuille.

10. Appareillage selon l'une quelconque des revendications 1 à 9, **caractérisé en ce qu'**un côté de ladite auge, qui est parallèle à la direction longitudinale de l'auge, est en totalité ou en presque totalité ouvert ; et l'appareillage est en outre configuré pour faire tomber, aider ou guider dans l'auge, en passant par ledit côté ouvert, le substrat de croissance découpé (11).
